# EUROPÄISCHE PATENTSCHRIFT

(11) **EP 1 342 553 B1**
(45) Veröffentlichungstag und Bekanntmachung des Hinweises auf die Patenterteilung: **18.05.2016**
(21) Anmeldenummer: 03004112.3
(22) Anmeldetag: 26.02.2003
(51) Int. Cl.: B29C 70/30, B29C 70/34, B29C 70/38, B64C 1/06, B29B 11/16, B29K 105/10

(54) **Verfahren zum Herstellen eines Fensterrahmens für Flugzeuge aus faserverstärktem Kunststoff und Vorrichtung zur Durchführung des Verfahrens**
Process for producing a fiber reinforced composite windowframe for airplanes and apparatus to implement the method
Procédé pour la fabrication d'un cadre de fenêtre d'avion en matériau composite renforcé de fibres et appareil pour mettre en oeuvre le procédé

(30) Priorität: 08.03.2002 DE 10210088; 06.11.2002 DE 10251580
(43) Veröffentlichungstag der Anmeldung: 10.09.2003
(73) Patentinhaber: Airbus Operations GmbH, 21129 Hamburg (DE)
(72) Erfinder: Eberth, Ulrich, Dipl.-Ing., 63897 Miltenberg (DE); Jörn, Paul, Dipl.-Ing., 22763 Hamburg (DE)
(74) Vertreter: Uexküll & Stolberg

(56) Entgegenhaltungen:
- EP-A- 0 749 825
- EP-A- 0 842 757
- EP-A- 1 149 687
- GB-A- 2 225 277
- US-A- 4 512 835
- US-A- 4 983 240
- US-A- 5 102 609

## Beschreibung

Die Erfindung bezieht sich auf ein Verfahren zur Herstellung eines Bauelementes aus faserverstärktem Kunststoff unter Verwendung von textilen Halbzeugen, die für die Herstellung von textilen vorformlingen konfektioniert und geformt werden, wobei textile Halbzeuge jeweils auf einem zugeordneten Träger angeordnet und mit einem Binder fixiert werden und Träger mit jeweils einer Negativ- bzw. Positivform zu der Kontur bzw. Geometrie des herzustellenden Vorformlings verwendet werden und wobei nach dem Entfernen der Träger die untereinander sowie auf die Gesamtgeometrie des Bauelementes abgestimmten Vorformlinge in einem Kompaktierungsschritt zu einem hochkompaktierten und endkonturennahen Bauelement zusammengesetzt werden, das anschließend mittels eines Matrixsystems mit einem Klebeharz getränkt und unter erhöhter Temperatur und gegebenenfalls erhöhtem Druck ausgehärtet wird. Ferner bezieht sie sich auf eine Vorrichtung zur Durchführung eines derartigen Verfahrens.

Im Flugzeugbau werden heutige Fensterrahmen überwiegend als geschmiedete Aluminiumteile gefertigt. Aus Gewichtseinsparungsgründen besteht jedoch der Wunsch, zukünftige Fensterrahmen aus faserverstärkten Kunststoffen zu fertigen.

Zur Herstellung von Bauelementen aus faserverstärkten Kunststoffen werden bisher textile Vorprodukte, sogenannte Halbzeuge, wie z.B. Gewebe und Geflechte, am Ende des Herstellungsprozesses in oder auf einen Zwischenträger aufgebracht. Bei Geweben kann es sich dabei beispielsweise um zylindrische Körper handeln, um die diese umlaufend bahnförmig aufgewickelt werden. Die Geometrie dieser Träger dient nicht nur zum Vor- oder Umformen der Halbzeuge, sondern auch als Hilfsmittel zu ihrem Transport und ihrer Lagerung. Im Laufe des weiteren Herstellungsprozesses werden die Halbzeuge dann vom Zwischenträgerkörper wieder entnommen, konfektioniert und anschließend durch Umorientierung und Umformen des Fasergebildes, auch als Drapieren bezeichnet, als sogenannter Vorformling oder Preform in die gewünschte Form gebracht.

Die Fixierung von Vorformlingen kann dabei mit Hilfe eines Binders geschehen, wobei es sich bei den verwendeten Bindersystemen hauptsächlich um thermoplastische Substanzen handelt, die z.B. pulverförmig auf das Halbzeug aufgebracht und unter Temperatureinfluß aktiviert werden. Neben einer Festlegung der Faserorientierung können die Bindersysteme dazu verwendet werden, die Vorformlinge in einem kompaktierten Zustand zu fixieren.

So ist aus der EP-A-0 749 825 ein Verfahren der eingangs genannten Art bekannt geworden, das zur Herstellung von kastenförmigen Bauelementen aus faserverstärktem Kunststoff dient, wobei es sich bei diesen Bauelementen um stringerversteifte Schalensegmente handelt, die aus Versteifungselementen und einem Schalensegment zusammengesetzt werden.

EP 0 842 757A1 offenbart ein Verfahren gemäß dem Oberbegriff des Anspruchs 1 und eine Vorrichtung gemäß dem Oberbegriff des Anspruchs 7.

Aufgabe der Erfindung ist es, ein derartiges Verfahren so auszubilden, daß es bei einer optimalen Ausnutzung der Eigenschaften von faserverstärkten Kunststoffen eine wirtschaftliche Fertigung von Fensterrahmen für Flugzeuge aus faserverstärktem Kunststoff ermöglicht. Weiterhin ist es Aufgabe der Erfindung, eine Vorrichtung zur Durchführung eines solchen Verfahrens bereitzustellen.

Die erste Aufgabe wird erfindungsgemäß durch ein Verfahren mit den kennzeichnenden Merkmalen des Patentanspruchs 1 gelöst. Vorteilhafte Ausgestaltungen des Verfahrens nach der Erfindung sind dabei aus den Unteransprüchen 2 bis 6 ersichtlich. Die Lösung der weiteren Aufgabe erfolgt durch eine Vorrichtung mit den kennzeichnenden Merkmalen des Patentanspruchs 7. Eine erfindungsgemäße Weiterbildung dieser Vorrichtung ist dem Unteranspruch 8 zu entnehmen.

Ein wesentlicher Vorteil der Erfindung besteht darin, daß sie auf einfache Weise die Herstellung von Bauteilen mit runden Ausschnittsverstärkungen ermöglicht, wie dies bei der Herstellung von Fensterrahmen für Flugzeuge aus faserverstärktem Kunststoff erforderlich ist. In einem Kompaktierungsschritt werden dabei gemäß der Erfindung die aus textilen Lagen hergestellten Vorformlinge zusammengebracht und zu einem hochkompaktierten und endkonturnahen Bauelement zusammengesetzt, wobei die textilen Halbzeuge zur Herstellung der Vorformlinge in einem kontinuierlichen Prozeß jeweils auf ein rotierendes Träger- und Umformwerkzeug aufgelegt werden.

Nachfolgend soll die Erfindung anhand von in der Zeichnung dargestellten Ausführungsbeispielen näher erläutert werden. Es zeigen
- Fig. 1:: einen Herstellungsprozess eines Vorformlings am Beispiel eines Flechtschlauches in Vorderansicht (Fig. 1 a) und in Seitenansicht (Fig. 1 b);
- Fig. 2:: Fixierungsmöglichkeiten der Halbzeuge auf den Umformwerkzeugen (Fig. 2a, 2b und 2c);
- Fig. 3:: drei Vorrichtungen zur Herstellung von drei unterschiedlich aufgebauten Vorformlingen (Fig. 3a, 3b, und 3c);
- Fig. 4:: den Ablauf zur Herstellung eines aus faserverstärktem Kunststoff bestehenden Bauelementes aus drei vorgefertigten Vorformlingen;
- Fig. 5:: einen von drei Vorformlingen eingeschlossenen Wickelkern; und
- Fig. 6:: einen alternativen Lege- und Drapiervorgang (Fig. 6a, 6b, 6c und 6d)

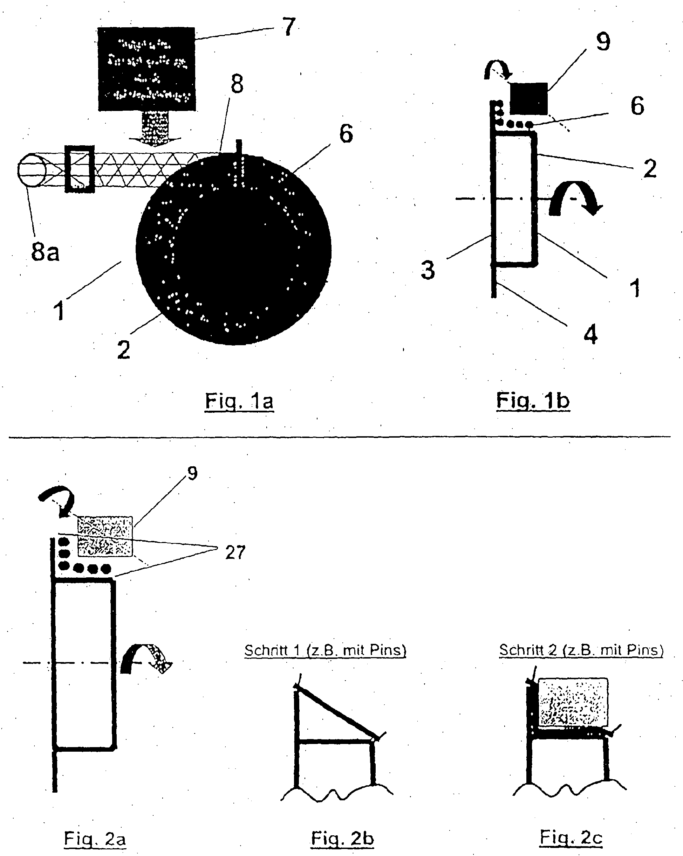

Die in den Fig. 1 a und 1 b dargestellte Vorrichtung zeigt ein rotierendes Träger- und Umformwerkzeug 1, welches eine zylinderische Trommel 2 mit einer seitlich an der Trommel 2 befestigten Begrenzungsscheibe 3 aufweist. Der Durchmesser der Begrenzungsscheibe 3 geht Ober den Durchmesser der Trommel 2 hinaus, so dass neben einer zylindrischen Aufnahmefläche 4 auch eine flanschähnliche Aufnahmefläche 5 für ein textiles Halbzeug 6 vorhanden ist. Auf die zylindrische Aufnahmefläche 4 der Trommel 2 wird ein lockeres, drapierbares und gegebenenfalls mit einem Binderauftrag 7 versehenes Vorgeflecht 8 aufgelegt, z. B. in Form eines Geleges oder eines Flechtschlauches 8a, wobei die Trommel 2 gleichzeitig zur fixierten Lagerung des Vorproduktes 8 als auch zum Transport des umgeformten Halbzeuges 6 dient. Der Binderauftrag 7 kann z.B. in Form eines Pulvers, Fadens oder Flächengebildes erfolgen, wobei der Binder z.B. durch Heißluft, Flamme, Infrarot oder Mikrowelle aktiviert werden kann. Durch zusätzliche Umform- und Anpressrollen 9, die mit der zylindrischen Aufnahmefläche 4 und der flanschähnlichen Aufnahmefläche 5 zusammenwirken, wird eine definierte Positionierung des Halbzeuges 6 erzielt. Die Umform- und Anpressrollen 9 können gegebenenfalls mit einer zeichnerisch nicht dargestellten Heiz- oder Kühlvorrichtung für den Binderauftrag und -aktivierung 7 ausgerüstet sein.

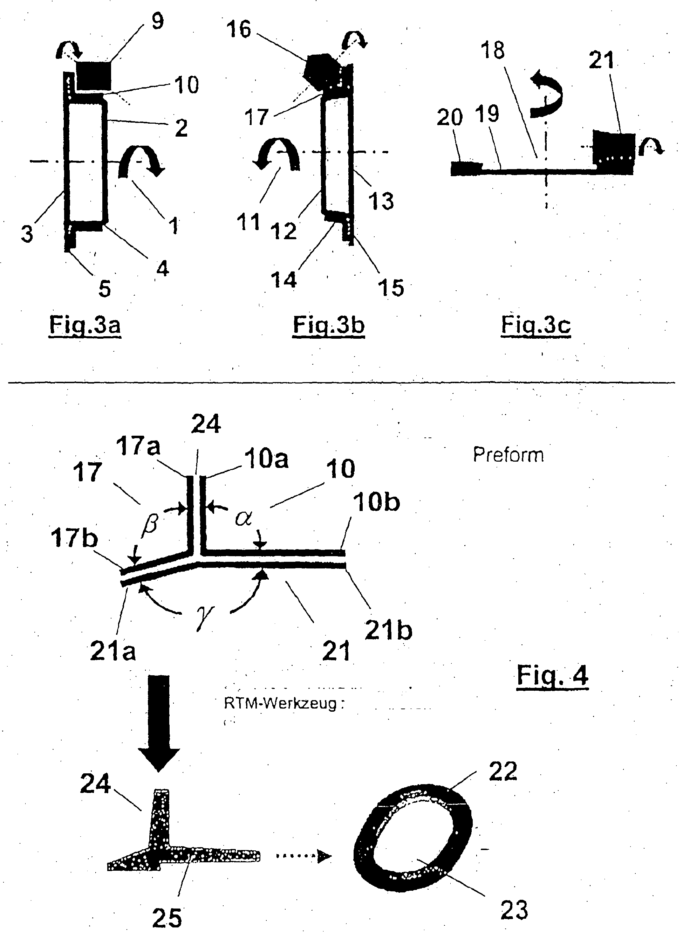

Aus Fig. 3a ist das in Fig. 1 gezeigte Träger- und Umformwerkzeug 1 in vereinfachter Form dargestellt, wobei deutlich zu ersehen ist, dass die Umform- und Anpressrollen oder -elemente 9 direkt auf dem Halbzeug 6 aufliegen. Die äußere zylindrische Aufnahmefläche 4 der Trommel 2 und die flanschähnliche Aufnahmefläche 5 bilden einen Winkel. Somit ist mit dieser Vorrichtung die Herstellung eines ersten ovalförmigen Vorformlings 10 oder Segmenten davon möglich, welcher eine ovalförmige Öffnung und in einem Winkel α zueinander angeordnete Schenkel 10a und 10b aufweist (wie auch in Fig. 4 dargestellt ist).

Das in Fig. 3b dargestellte Träger- und Umformwerkzeug 11, dessen Trommel mit 12, Begrenzungsscheibe mit 13 und Aufnahmeflächen mit 14 sowie 15 bezeichnet sind, unterscheidet sich von demjenigen gemäß Fig. 3a dadurch, dass der von der äußeren zylindrischen Aufnahmefläche 14 und der flanschähnlichen Aufnahmefläche 15 gebildete Winkel größer als 90° ist. Die mit 16 bezeichneten Umform- und Anpressrollen sind der Lage der zylindrischen und flanschähnlichen Aufnahmeflächen 14 und 15 angepasst. Mit dieser Vorrichtung kann der zweite ovalförmige Vorformling 17 mit ovaler Öffnung hergestellt werden, dessen Schenkel 17a und 17b einen Winkel β von größer 90° einschließen (vgl. Fig.4).

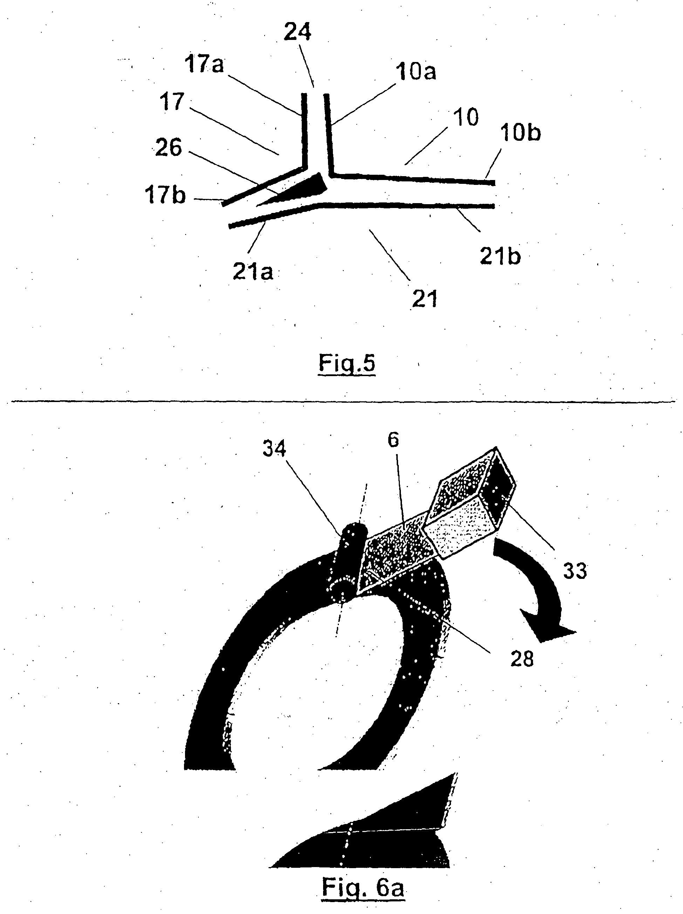

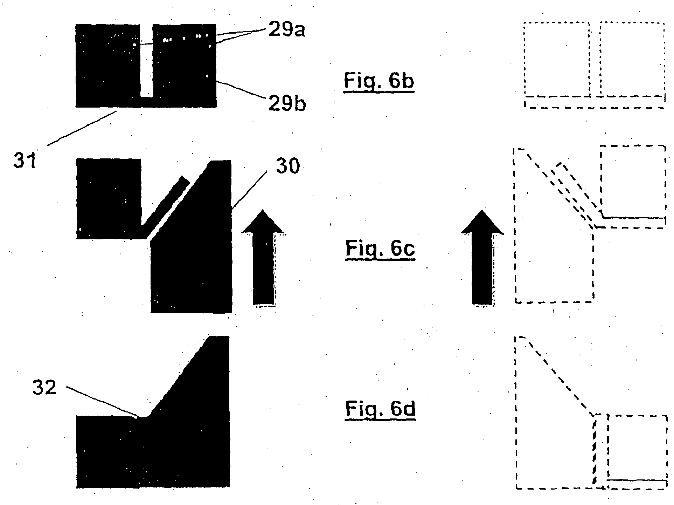

Eine weitere Herstellungsmöglichkeit für ovale Vorfirmlinge mit L-förmigen Querschnitt ist in Fig. 6 dargestellt. Hierbei wird ein bandförmiges textiles Halbzeug 6 auf einer ebenen, der Kontur des zu fertigenden Vorformlings teilweise angepasster Legematrize 29a durch Drehen des Legekopfes 33 oder der Legematrize abgelegt. Nach dem Legevorgang wird ein Teil des Legewerkzeugs 29b entfernt und mit Hilfe einer weiteren Matrize 30 ein Teil des Vorformlings 31 umgeformt, so dass ein Vorformling mit der gewünschten Kontur 32 entsteht.

Zur Herstellung eines dritten flachen, ovalen Vorformlings 21 mit ovaler Öffnung oder Teilstücke davon, dessen Schenkel 21 a und 21 b einen Winkel unterhalb von 180° oder beispielsweise einen Absatz einschließen (siehe auch Fig. 4), ist das in Fig. 3b gezeigte Träger- und Umformwerkzeug vorgesehen. Es handelt sich hierbei um eine rotierende Drehscheibe 18, welche auf einer ihrer Stirnseiten 19 eine kreisringförmige Aufnahmefläche 20 aufweist. Diese Aufnahmefläche 20 ist den Schenkeln 21 a und 21 b sowie dem Winkel γ zwischen den Schenkeln 21 a und 21 b oder einer Durchsetzung des dritten Vorformlings 21 derart angepasst, dass der dritte Vorformling 21 im Auflegverfahren hergestellt werden kann.

Gemäß Fig. 4 sind zur Herstellung eines aus faserverstärktem Kunststoff bestehenden Bauelementes, im gezeigten Fall zur Herstellung eines ovalen Fensterrahmens 22 mit ovaler Öffnung 23 für ein Flugzeugfenster, die drei ovalen Vorformlinge 10, 17 und 21 vorgesehen, wobei die zeichnerische Darstellung einen Querschnitt durch eine einen Teil des Fensterrahmens 22 zeigt. Der dritte Vorformlinge 21 mit seinen Schenkeln 21 a und 21 b, die einen Winkel γ unterhalb von 180° und eine eventuelle Durchsetzung einschließen, bildet den Basiskörper für den Fensterrahmen 22, während der Steg 24 des Fensterrahmens 22 von den beiden Schenkeln 10a und 17a der beiden anderen Vorformlinge 10 und 17 gebildet wird. Hierbei können die Vorformlinge 10, 17 und 21 aus mehreren übereinander gewickelten textilen Lagen oder aus weiteren Subpreforms hergestellt werden.

Als zusätzlich mögliches Preformelement zeigt Fig. 5 einen Wickelkern 26, der zwischen den benachbarten Schenkeln 10a, 10b, 17a, 17b, 21a und 21b der drei Vorformlinge 10,17 und 21 angeordnet ist.

Wie der.Fig. 4 weiterhin zu entnehmen ist, werden die untereinander sowie auf die Gesamtgeometrie des Fensterrahmens 22 abgestimmten Vorformlinge 10,17 und 21 in einem Kompaktierungsschritt zu einem hochkornpaktierten und endkonturennahen Fensterrahmen 22 zusammengesetzt, dessen Querschnitt mit 25 bezeichnet ist. Anschließend wird der zusammengesetzte Fensterrahmen 25 mittels eines Matrixsystems mit einem Klebeharz getränkt und unter erhöhter Temperatur und gegebenen- falls erhöhtem Druck ausgehärtet, so dass als Ergebnis des Herstellungsverfahrens der Fensterrahmen 22 vorliegt.

## Patentansprüche

1. Verfahren zur Herstellung eines Bauelementes aus faserverstärktem Kunststoff unter Verwendung von textilen Halbzeugen (6), die für die Herstellung von textilen Vorformlingen (10, 17, 21) konfektioniert und geformt werden, wobei textile Halbzeuge (6) jeweils auf einem zugeordneten Träger (1, 11, 18) angeordnet und mit einem Binder fixiert werden und Träger (1, 11, 18) mit jeweils einer Negativ- bzw. Positivform zu der Kontur bzw. Geometrie des herzustellenden Vorformlings (10, 17, 21) verwendet werden und wobei nach dem Entfernen der Träger (1, 11, 18) die untereinander sowie auf die Gesamtgeometrie des Bauelementes abgestimmten Vorformlinge (10, 17, 21) in einem Kompaktierungsschritt zu einem hochkompaktierten und endkonturennahen Bauelement (22) zusammengesetzt werden, das anschließend mittels eines Matrixsystems mit einem Klebeharz getränkt und unter erhöhter Temperatur und gegebenenfalls erhöhtem Druck ausgehärtet wird, **dadurch gekennzeichnet, dass** zur Herstellung eines Fensterrahmens (22) für Flugzeugfenster wenigstens zwei Vorformlinge (10, 17, 21) mit jeweils einer ovalförmigen Öffnung und mit jeweils abgewinkelten Schenkeln (10a, 10b, 17a, 17b, 21a, 21b) aus textilen Lagen hergestellt werden, wobei als Träger (1, 11, 18) jeweils ein rotierendes Träger- und Umformwerkzeug (1, 11,18) verwendet wird, auf das das jeweilige textile Halbzeug (6) aufgelegt wird und welches eine zylindrische bzw. kreisringflächenförmige Aufnahmefläche (4, 14 bzw. 20) für ein textiles Halbzeug (6) aufweist, und jeweils ein Schenkel eines Vorformlings (10, 17, 21) zu einem Schenkel eines anderen Vorformlings (10, 17, 21) derart benachbart angeordnet wird, dass ein ovaler ebener Fensterrahmen (22) mit einem annähernd senkrecht zur Ebene verlaufenden Steg (24) gebildet wird.

2. Verfahren nach Anspruch 1, **dadurch gekennzeichnet, dass** durch einen Umform- und Drapierprozess die nicht endgültig fixierten Fasern der Halbzeuge (6) in eine gewünschte Orientierung gebracht werden.

3. Verfahren nach Anspruch 1 oder 2, **gekennzeichnet durch** die Verwendung eines Binders (7) in Form eines Fluids, pastösen Stoffes, Pulvers, Fadens oder Flächengebildes.

4. Verfahren nach Anspruch 3, **dadurch gekennzeichnet, dass** der Binder (7) durch Heißluft, Flamme, Infrarot, Induktion, Laser, Kontaktwärme oder Mikrowelle aktiviert wird.

5. Verfahren nach einem der Ansprüche 1 bis 4, **dadurch gekennzeichnet, dass** die Vorformlinge (10, 17, 21) aus mehreren übereinander abgelegten textilen Lagen oder einzelnen textilen Lagen hergestellt werden, die entweder eine geschlossene ovalförmige Kontur oder ein Segment davon darstellen.

6. Verfahren nach Anspruch 4 oder 5, **gekennzeichnet durch** die Anordnung eines Wickelkernes (26) zwischen den benachbarten Schenkeln (10a, 10b, 17a, 17b, 21a, 21b) der drei Vorformlinge (10, 17, 21).

7. Vorrichtung **dadurch gekennzeichnet, daß** die Vorrichtung zur Durchführung des Verfahrens nach einem der Ansprüche 1 bis 6 geeignet ist und in Form eines rotierenden Träger- und Umformwerkzeuges ausgebildet ist, wobei das Träger- und Umformwerkzeug (1, 11, 29a) als eine rotierende Trommel (2, 12) mit einer zylindrischen äußeren Aufnahmefläche (4, 14) und mit einer seitlich an der Trommel (2, 12) befestigten Begrenzungsscheibe (3, 13) ausgebildet ist, wobei der Durchmesser der Begrenzungsscheibe (3, 13) den Außendurchmesser der Trommel (2, 12) derart übertrifft, dass eine flanschähnliche Aufnahmefläche (5, 15) für das Halbzeug auf einer Stirnseite der Begrenzungsscheibe (3, 13) entsteht, und wobei Umform- und Anpressrollen oder -elemente (9, 16, 21, 34) vorgesehen sind, die mit der zylindrischen äußeren Aufnahmefläche (4, 14) der Trommel (2, 12) und der flanschförmigen Aufnahmefläche (5, 15) der Begrenzungsscheibe (3, 13) für eine definierte Positionierung der Halbzeuge zusammenwirken.

8. Vorrichtung nach Anspruch 7 **dadurch gekennzeichnet, dass** die flanschförmige Aufnahmefläche (5, 15) der Begrenzungsscheibe (3, 13) unter einem vorgegebenen Winkel, der von der Kontur bzw. Geometrie des herzustellenden Vorformlings (10, 17) abhängig ist, zu der zylindrischen äußeren Aufnahmefläche (4, 14) der Trommel (2, 12) angeordnet ist.

## Claims

1. A method of manufacturing a component made of fiber-reinforced plastic using textile semi-finished products (6), which are tailored and formed for the production of textile preforms (10, 17, 21), wherein textile semi-finished products (6) are respectively arranged on an associated carrier (1, 11, 18) and are fixed using a binder and carriers (1, 11, 18) each having a negative or a positive form with respect to the contour or geometry of the preform (10, 17, 21) to be produced are used, and wherein subsequent to the removal of the carriers (1, 11, 18) the preforms (10, 17, 21), which are matched to each other as well as to the overall geometry of the component, are assembled in a compacting step to form a highly compacted component (22), which has a contour close to the final contour of the finished component and which is subsequently impregnated by means of a matrix system with an adhesive resin and cured under elevated temperature and possibly elevated pressure, **characterized in that** for manufacturing a window frame (22) for aircraft windows at least two preforms (10, 17, 21), each having an oval-shaped opening and each having angled legs (10a, 10b, 17a, 17b, 21a, 21b), are produced from textile layers, wherein in each case a rotating carrier and forming tool (1, 11, 18) is used as carrier (1, 11, 18), on which rotating carrier and forming tool the respective textile semi-finished product (6) is disposed and which comprises a cylindrical or circular ring-shaped receiving surface (4, 14 or 20) for a textile semi-finished product (6), and in each case a leg of a preform (10, 17, 21) is arranged adjacent to a leg of another preform (10, 17, 21) in such a manner that an oval planar window frame (22) having a web (24) extending approximately perpendicular with respect to the plane is formed.

2. A method according to claim 1, **characterized in that** the not finally fixed fibers of the semi-finished products (6) are brought into a desired orientation by means of a forming and draping process.

3. A method according to claim 1 or 2, **characterized by** the use of a binder (7) in the form of a fluid, paste-like substance, powder, thread or fabric.

4. A method according to claim 3, **characterized in that** the binder (7) is activated by hot air, flame, infrared, induction, laser, contact heat or microwave.

5. A method according to any of claims 1 to 4, **characterized in that** the preforms (10, 17, 21) are produced from multiple textile layers laid one on top of the other or from single textile layers, which represent either a closed oval-shaped contour or a segment thereof.

6. A method according to claim 4 or 5, **characterized by** the arrangement of a winding core (26) between the adjacent legs (10a, 10b, 17a, 17b, 21a, 21b) of the three preforms (10, 17, 21).

7. An apparatus, **characterized in that** the apparatus is suitable for carrying out the method according to any of claims 1 to 6 and is configured in the form of a rotating carrier and forming tool, wherein the carrier and forming tool (1, 11, 29a) is constructed as a rotating drum (2, 12) having a cylindrical outer receiving surface (4, 14) and having a limiting disc (3, 13) laterally attached to the drum (2, 12), wherein the diameter of the limiting disc (3, 13) exceeds the outer diameter of the drum (2, 12) in such a manner that a flange-like receiving surface (5, 15) for the semi-finished product is formed on an end face of the limiting disc (3, 13), and wherein forming and pressure rollers or elements (9, 16, 21, 34) are provided which cooperate with the cylindrical outer receiving surface (4, 14) of the drum (2, 12) and the flange-like receiving surface (5, 15) of the limiting disc (3, 13) for a defined positioning of the semi-finished products.

8. A device according to claim 7, **characterized in that** the flange-like receiving surface (5, 15) of the limiting disc (3, 13) is arranged at a predetermined angle with respect to the cylindrical outer receiving surface (4, 14) of the drum (2, 12), which angle depends on the contour or geometry of the preform (10, 17) to be produced.

## Revendications

1. Procédé pour la fabrication d'un élément de construction en matière synthétique en utilisant des produits semi-finis textiles (6) qui sont confectionnés et formés pour la fabrication de préformes textiles (10, 17, 21), cependant que les produits semi-finis textiles (6) sont placés respectivement sur un support correspondant (1, 11, 18) et sont fixés avec un liant et que des supports (1, 11, 18) sont utilisés avec respectivement un moule négatif et un moule positif par rapport au contour ou à la géométrie de la préforme à fabriquer (10, 17, 21) et cependant qu'après avoir enlevé les supports (1, 11, 18) les préformes (10, 17, 21) adaptées les unes aux autres ainsi qu'à la géométrie d'ensemble de l'élément de construction sont assemblées en un élément de construction extrêmement compacté et proche des contours finaux (22) qui est imbibé d'une résine adhésive au moyen d'un système de matrice et qui est durci à haute température et, le cas échéant, à haute pression, **caractérisé en ce que**, pour la fabrication d'un cadre de fenêtre (22) pour des fenêtres d'avion, au moins deux préformes (10, 17, 21) avec respectivement une ouverture de forme ovale et avec des montants respectivement coudés (10a, 10b, 17a, 17b, 21 a, 21 b) sont fabriqués en couches textiles, cependant qu'un porte-outil et un outil de façonnage rotatif (1, 11, 18) est utilisé comme support (1, 11, 18) sur lequel le produit semi-fini textile (6) est appliqué et qui présente une surface de logement cylindrique ou en forme de surface circulaire annulaire (4, 14 ou 20) pour un produit semi-fini textile (6) et que respectivement un montant d'une préforme (10, 17, 21) est placé voisin d'un montant d'une autre préforme (10, 17, 21) de telle manière qu'un cadre de fenêtre plat ovale (22) est formé avec une traverse approximativement perpendiculaire au plan (24).

2. Procédé selon la revendication 1, **caractérisé en ce que** les fibres qui ne sont pas définitivement fixées des produits semi-finis (6) sont amenées par un processus de déformation et de drapage dans une orientation souhaitée.

3. Procédé selon la revendication 1 ou 2, **caractérisé par** l'utilisation d'un liant (7) sous forme de fluide, de matière pâteuse, de poudre, de fil ou de structure plane.

4. Procédé selon la revendication 3, **caractérisé en ce que** le liant (7) est activé par de l'air chaud, une flamme, par infrarouge, induction, laser, chaleur de contact ou micro-onde.

5. Procédé selon l'une des revendications 1 à 4, **caractérisé en ce que** les préformes (10, 17, 21) sont fabriquées à partir de plusieurs couches textiles déposées l'une sur l'autre ou de couches textiles individuelles qui constituent soient un contour en forme d'ovale fermé, soit un segment de celui-ci.

6. Procédé selon la revendication 4 ou 5, **caractérisé par** la disposition d'un noyau d'enroulement (26) entre les montants voisins (10a, 10b, 17a, 21a, 21b) des trois préformes (10, 17, 21).

7. Dispositif pour exécuter le procédé selon l'une des revendication 1 à 6, **caractérisé en ce que** le dispositif est approprié et est configuré en forme de porte-outil et d'outil de façonnage rotatif, cependant que le porte-outil et l'outil de façonnage (1, 11, 29a) est configuré comme un tambour rotatif (2, 12) avec une surface de logement extérieure cylindrique (4, 14) et avec un disque de délimitation (3, 13) qui est fixé latéralement au tambour (2, 12), cependant que le diamètre du disque de délimitation (3, 13) dépasse le diamètre du tambour (2, 12) de telle manière qu'une surface de logement semblable à une bride (5, 15) est créée pour le produit semi-fini avec un côté frontal du disque de délimitation (3, 13) et cependant que des rouleaux ou des éléments de façonnage et de pression (9, 16, 21, 34) sont prévus qui coopèrent avec la surface de logement extérieure cylindrique (4, 14) du tambour (2, 12) et la surface de logement semblable à une bride (5, 15) du disque de délimitation (3, 13) pour un positionnement défini des produits semi-finis.

8. Dispositif selon la revendication 7, **caractérisé en ce que** la surface de logement semblable à une bride (5, 15) du disque de délimitation (3, 13) est placée par rapport à la surface de logement extérieure cylindrique (4, 14) du tambour (2, 12) dans un angle prédéfini qui dépend du contour ou de la géométrie de la préforme à fabriquer (10, 17).
